# NEUE EUROPÄISCHE PATENTSCHRIFT

(11) **EP 2 016 138 B2**
(45) Veröffentlichungstag und Bekanntmachung des Hinweises auf die Entscheidung über den Einspruch: **20.07.2016**
(45) Hinweis auf die Patenterteilung: 14.07.2010
(21) Anmeldenummer: 08749406.8
(22) Anmeldetag: 08.05.2008
(51) Int. Cl.: C09D 5/08

(54) **KORROSIONSSCHUTZSYSTEM FÜR METALLE UND PIGMENT HIERFÜR**
ANTI-CORROSION SYSTEM FOR METALS AND PIGMENT THEREFOR
SYSTÈME DE PROTECTION CONTRE LA CORROSION POUR MÉTAUX ET PIGMENT ASSOCIÉ

(30) Priorität: 08.05.2007 DE 102007021602
(43) Veröffentlichungstag der Anmeldung: 21.01.2009
(73) Patentinhaber: Voestalpine Stahl GmbH, 4020 Linz (AT)
(72) Erfinder: PRIEWASSER, Franz, 4982 St. Georgen (AT); STELLNBERGER, Karl-Heinz, AT-4491 Niederneukirchen (AT); WIESINGER, Siegfried, 4231 Wartberg (AT); HAGLER, Josef, 4060 Leonding (AT); LUCKENEDER, Gerald, 4812 Pinsdorf (AT)
(74) Vertreter: Naefe, Jan Robert
(86) Internationale Anmeldenummer: PCT/EP2008/003718
(87) Internationale Veröffentlichungsnummer: WO 2008/135292

(56) Entgegenhaltungen:
- DE-A1-102004 037 542
- DE-A1-102005 059 614

## Beschreibung

Die Erfindung betrifft eine Korrosionsschutzsystem und insbesondere ein Beschichtungssystem für Metalle.

An metallischen Bauteilen und insbesondere Karosserien von Kraftfahrzeugen gibt es unterschiedliche Korrosionsprobleme, zum einen eine Korrosion von außen nach innen, bei der aufgrund Korrosion eine Lackunterwanderung stattfindet. Hierbei handelt es sich um eine eher kosmetische Korrosion.

Zudem gibt es eine Korrosion von innen nach außen in Börderlungen und Flanschbereichen, die häufig zu Durchrostungen führt.

Im Stand der Technik werden metallische Bauteile mit einer Grundierung, einem sogenannten Korrosionsschutzprimer gegen Korrosion temporär geschützt. In diesen organischen Lacksystemen sind derzeit organische, metallische und anorganische Korrosionsschutzpigmente, wie z.B. Zink, Silikate, Phosphate, Chromate usw. eingebaut, die die Substratoberfläche durch unterschiedliche Mechanismen (Ionentausch, usw.) schützen sollen.

Im Dauerfeuchtbereich versagen diese Lacksystem jedoch und bilden durch Grundmaterialangriff Blasen, wodurch eine Entlackung eintritt, die den Korrosionsangriff noch einmal beschleunigt. Die üblichen Korrosionsschutzaufbauten auf Metallen sehen am Beispiel des Stahls so aus, dass ein metallischer Überzug vorhanden ist, der elektrolytisch oder durch Schmelztaubeschichtung aufgebracht ist. Das häufigste Beschichtungsmetall ist Zink, gefolgt von Zink-Aluminium-Beschichtungen und Aluminiumbeschichtungen. Derartige Bleche werden durch Chromatieren, chromatfrei oder Phosphatieren vorbehandelt, anschließend die bekannten Korrosionsschutzprimer aufgebracht und auf diese ein ein- oder mehrschichtiger Decklack.

Aus dem Stand der Technik sind unterschiedlichste Aufbauten und insbesondere unterschiedlichste Primer bekannt.

Aus der DE 103 007 51 A1 ist ein Verfahren zur Beschichtung von metallischen Oberflächen, Beschichtungszusammensetzungen und derart hergestellte Überzüge bekannt. Die hierin beschriebenen, im Wesentlichen organischen Zusammensetzungen umfassen zudem organische oder/und anorganische Korrosionsinhibitoren, sowie gegebenenfalls weitere Additive wie Pigmente. Die Korrosionsinhibitoren sollen Korrosionsschutzpigmente bzw. Verbindungen auf Basis von Titan, Hafnium, Zirkonium, Carbonat und/oder Amoniumcarbonat sein, wobei die Korrosionsschutzpigmente vorzugsweise solche auf Basis von Kieselsäuren, Oxyden und/oder Silikaten, wie z.B. Erdalkali-haltigen Korriosionsschutzpigmenten sein sollen. Als Beispiel werden besondere Calcium-modifizierte Kieselsäure bzw. Silikatpigmente erwähnt. Ferner können als Korrosionsschutzpigmente insbesondere solche auf Basis von jeweils mindestens einem Oxyd, Phosphat und/oder Silikat eingesetzt werden.

Aus der EP 1 030 894 B1 ist eine leitfähige organische Beschichtung als sogenannter Korrosionsschutzprimer bekannt, welcher eine gute Schweißbarkeit besitzen soll. Zu diesem Zweck sind feinteilige, leitfähige Füllstoffe enthalten, z.B. pulverförmiges Zink, pulverförmiges Aluminium, Graphit und/oder Molybdensulfit, Ruß, Eisenphosphit oder mit Zinn bzw. Antimon dotiertes Bariumsülfat. Zudem können Korrosionsschutzpigmente enthalten sein, z.B. Zink-Calcium-Aluminium-Strontium-Polyphosphat-Silikathydrat, Zink-Bor-Wolfram-Silikat oder dotiertes CO₂.

Aus der DE 25 60 072 ist die Herstellung des Pigments auf Eisenoxydbasis und seine Verwendung für den Korrosionsschutz bekannt, wobei dieses Pigment neben Eisen auch Magnesium und/oder Calciumoxyde enthalten kann, indem neben Calcium und/oder Magnesium auch Zink unter Substitution der entsprechenden mularen Mengen sein kann.

Aus der DE 102 47 691 A1 sind ein Gemisch zum Aufbringen eines polymeren korrosionsbeständigen verschleißarm umformbaren Überzugs und ein Verfahren zum Herstellen dieses Überzugs bekannt. Das Gemisch soll beispielsweise auf ein verzinktes Stahlblech aufbringbar sein, wobei das Gemisch ein Gehalt an elektrisch leitfähigen und/oder halbleitenden Elementen ausgewählt aus der Gruppe von elektrisch leitfähigen und/oder halbleitenden Partikeln vorhanden sind, sondern auch Eisenphosphit oder metallisches Zink sowie gegebenenfalls bis zu 5 Gew.-% Graphit und/oder Molybdänsulfit. Diese sollen eine bestimmte Korngrößenverteilung erfüllen. Diese elektrisch leitfähigen und/oder halbleitenden Partikel sollen ausgewählt sein aus solchen auf Basis von Borid, Carbid, Oxid, Phosphid, Phosphat, Silikat und/oder Silizid, beispielsweise auf Basis von Aluminium, Chrom, Eisen, Calcium, Calcium-Magnesium, Mangan, Nickel, Kobalt, Kupfer, Lanthan, Lanthanid, Molybdän, Titan, Vanadium, Wolfram, Yttrium, Zink, Zinn und/oder Zirkonium.

Aus der DE 102 17 624 A1 sind ein Gemisch zum Aufbringen eines polymeren korrosionsbeständigen verschleißarm umformbaren Überzug und ein Verfahren zum Herstellen des Überzugs bekannt, die im Wesentlichen denen der bereits zitierten DE 102 47 691 A1 entsprechen.

Aus der EP 1 050 603 B1 ist ein oberflächenbehandeltes Stahlblech mit hervorragenden Korrosionswiderstand bekannt. Dieses beschichtete Stahlblech umfasst ein mit Zink oder einer Zinklegierung überzogenes Stahlblech oder ein mit Aluminium oder einer Aluminiumlegierung überzogenes Stahlblech und eine Komposit-Oxydbeschichtung, die auf der Oberfläche des beschichteten Stahlbleches gebildet ist, sowie eine organische Beschichtung, die auf der Komposit-Oxydbeschichtung ausgebildet sein soll. Die Komposit-Oxydbeschichtung enthält neben feinen Oxydteilchen mindestens ein Metall, ausgewählt aus der Gruppe bestehend aus Magnesium, Calcium, Strontium und Barium einschließlich möglichen Verbindungen bzw. Legierungen und Phosphorsäure oder eine Phosphorsäureverbindung, wobei die organische Beschichtung ein Reaktionsprodukt zwischen einem filmbildenden organischen Harz und einer mit aktiven Wasserstoff beladenen Verbindung umfasst, wobei ein Teil oder die gesamte Verbindung ein Hydrazinderivat ist. Es wird vermutet, dass selbst wenn Defekte in der Beschichtung auftreten, eine kathodische Reaktion von OH⁻-Ionen freisetzt, die die Oberfläche in den alkalischen Bereich bewegt und Magnesiumionen und Calciumionen als Magnesiumhydroxyd und Calciumhydroxyd freigesetzt sind, die als dichte und nur gering lösliche Reaktionsprodukte die Defekte versiegeln. Das Hydrazinderivat soll hierbei in der Lage sein, eine stabile passive Schicht durch eine starke Bindung mit der Oberfläche der ersten Schicht auszubilden und umschließt die Zinkionen, welche bei einer Korrosionsreaktion freigelegt werden, wodurch eine unlösliche gelierte Schicht ausgebildet wird.

Aus der GB 846904 ist ein Pigment aus einer binären Zink-Magnesium-Legierung bekannt, die in Farben eingesetzt werden kann. Dieses Pigment soll besonders stabil gegen Korrosion sein, so dass mit diesem Pigment im Lack eine gewisse Barriere gegen Korrosion erreicht werden soll. Um die Pigmente im Lack gegen Korrosion zu schützen, soll es vorteilhaft sein, den Lack mit einer zusätzlichen Beschichtung zu schützen.

Aufgabe der Erfindung ist es, ein Korrosionsschutzsystem zu schaffen, welches zuverlässig die Korrosion verhindert und bei korrosiven Angriffen einen zusätzlichen Schutzmechanismus entwickelt.

Die Aufgabe wird durch ein Korrosionsschutzsystem mit den Merkmalen des Anspruchs 1 gelöst.

Erfindungsgemäß sind in einer organischen Matrix, z. B. einem Lack, einem Kleber oder einem sogenannten Korrosionsschutzprimer, legierte metallische Pigmente, z. B. Zink-Magnesium legierte, gegebenenfalls mit Zinkpigmenten gemischt, enthalten. Eine derartige organische Matrix wird beispielsweise als Korrosionsschutzprimer bei Karosserieblechen, als Kleber von Karosserieblechen oder auch anderen Anwendungen als bei Kraftfahrzeugen oder in Lacken, z. B. Lacken in der Hausgeräteindustrie, in der Automobilindustrie oder Ähnlichem eingesetzt. Zudem kann erfindungsgemäß der Einsatz dieser Pigmente in einer organischen Matrix auch im Schwerkorrosionsschutz, z. B. im Schiffbau, eingesetzt werden.

Überraschender Weise und ohne dass die Effekte aufgeklärt werden konnten, hat sich ergeben, dass bei der Verwendung von legierten metallischen Pigmenten, also Pigmenten, die nicht in anorganisch mineralischer oder ionarer Form vorliegen, z. B. Zink-Magnesium legierte Pigmentpartikel, eine völlig unerwartete Reaktion bei korrosiven Angriffen stattfindet.

Es konnte festgestellt werden, dass bei korrosiven Angriffen die Partikel in der organischen Matrix aufgelöst werden, das aufgelöste Metall zur Oberfläche des Metallsubstrats bzw. zu einer Oberfläche der Stahlsubstratbeschichtung aus Metall wandert und dort eine Passivschicht abscheidet. Es findet somit eine korrosionsinduzierte Umlagerung der Pigmentmetalle und Bildung der Passivschicht statt. Dieser Mechanismus ist dabei so wirkungsvoll, dass die Zinkauflage auf Stahlblechen und die Lackschichtdicke verringert werden kann, wobei sowohl die kosmetische Korrosion als auch Korrosion in Dauerfeuchtbereichen und Flanschkorrosion erheblich geringer sind als bei allen bekannten Korrosionsschutzsystemen im Stand der Technik.

Die Erfindung ermöglicht es sekundäre Korrosionsschutzmaßnahmen, wie z.B. das Fluten mit Wachsen- oder Hohlraumkonservierungen wegzulassen oder deutlich zu reduzieren.

Zudem können neue Designs eingesetzt werden, die in der Herstellung günstiger (ohne versteckte Kanten) sind und bei der Herstellung von Bauteilen weniger Beschränkungen unterliegen.

Das Bindemittel-Pigment-Verhältnis wird bei dem erfindungsgemäßen System im Vergleich zu den herkömmlichen auf 1:1 bis 1:4 eingestellt.

Zudem können Hydrophobiermittel und Wachse als Umformhilfsmittel eingesetzt werden, wobei als Hydrophobiermittel beispielsweise Silane eingesetzt werden können und als Umformhilfsmittel beispielsweise Karnauba.

Die erzielbare Lackschichtdicke kann auf 1 bis 4 µm, insbesondere auf 1,5 bis 3,5 µ reduziert werden statt der üblichen 3 bis 5 µm. Weiters ergibt sich aufgrund einer reduzierten Festkörperdichte von < 2,0 (herkömmliche ca. 3,5) eine Erhöhung der Lackergiebigkeit (bis 30 % weniger Lackverbrauch).

Zudem kann das erfindungsgemäße Lacksystem eine verbesserte Umformbarkeit und damit einen deutlich niedrigeren Werkzeugverschleiß aufweisen.

Der Erfindung gelingt es dabei in hervorragender Weise, die an sich gegensätzlichen Ziele Schweißeignung einerseits und Korrosionsschutz andererseits miteinander zu verbinden.

Die Erfindung wird beispielhaft anhand einer Zeichnung erläutert. Es zeigen hierbei:
- Figur 1:: einen erfindungsgemäßen Schichtaufbau bei der Anwendung als Lacksystem im Automobilbereich;
- Figur 2:: ein Vergleich der Korrosionsmechanismen im Stand der Technik und der Erfindung;
- Figur 3:: elektromikroskopische Querschliffe nach einem Korrosionsangriff gemäß DIN EN ISO 9227 (500 Stunden) im Stand der Technik und bei der Erfindung;
- Figur 4:: eine elektronenmikroskopische Aufnahme eines erfindungsgemäßen Korrosionsschutzpigments;
- Figur 5:: einen elektromikroskopischen Querschliff des erfindungsgemäßen Schichtaufbaus vor einem Korrosionsangriff und den Querschliff des erfindungsgemäßen Schichtaufbaus nach einem Korrosionsangriff.

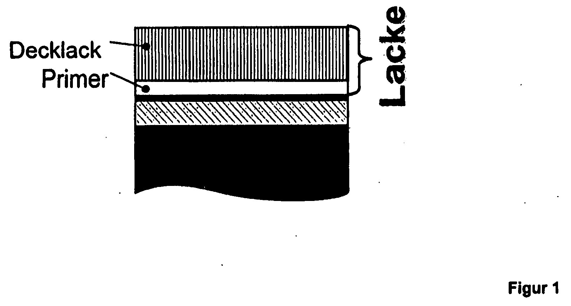

Der erfindungsgemäße Schichtaufbau (Figur 1) umfasst ein Metallsubstrat 1, z.B. ein Blech, wie z.B. ein Stahlblech, welches von Korrosion geschützt werden soll.

Auf dem Substrat 1 kann eine metallische Schutzschicht 2 aufgebracht sein. Die metallische Schutzschicht 2 ist beispielsweise eine Schutzschicht 2, die als kathodischer Schutz oder als Barriereschutz wirkt.

Die Schutzschicht 2 ist für den Fall, dass es sich um eine kathodische Schutzschicht 2 handelt, beispielsweise eine Zinkschicht eine Zink-Aluminium-Schicht, eine Zink-Chrom-Schicht oder eine Zink-Magnesium- oder andere kathodisch wirkende Schutzschicht, z. B. eine Galvanealed-Schicht.

Die kathodische Schutzschicht 2 kann im Schmelztauchverfahren, durch Elektrolyse oder andere bekannte Verfahren, wie z.B. PVD- oder CVD-Verfahren auf dem Substrat 1 abgeschieden sein.

Für den Fall, dass die Schutzschicht 2 eine Barriereschutzschicht ist, besteht diese Barriereschutzschicht 2 beispielsweise aus Aluminium, Aluminiumlegierungen, Zinn oder ähnlichen Metallen.

Auch eine Barriereschutzschicht 2 kann im Schmelztauchverfahren, elektrolytisch oder durch CVD- oder PVD-Verfahren abgeschieden sein.

Die Schicht 2 kann auch als mehrschichtig metallisch ausgebildet sein.

Gegebenenfalls aber nicht zwingend kann zur Verbesserung der Lackhaftung eine Vorbehandlungsschicht 3 vorhanden sein. Die Vorbehandlungsschicht 3 kann eine Chromatierung oder Phosphatierung sein und ist vorzugsweise eine chromatfreie Vorbehandlung mit Magnesiumphosphaten.

Auf die Vorbehandlungsschicht 3 ist ein so genannter Primer 4 aufgebracht, wobei der Primer 4 die erfindungsgemäßen Korrosionsschutzpigmente enthält. Der Primer 4 umfasst eine organische Komponente und die erfindungsgemäßen Korrosionsschutzpigmente sowie gegebenenfalls Füllstoffe und Hilfsstoffe.

Die organischen Bestandteile sind z.B. Monomere, Oligomere und Polymere, die vorzugsweise zumindest teilweise anionisch, kationisch und/oder radikalisch härtbar sind. Zudem sind gegebenenfalls organische Lösemittel oder Wasser oder Alkohole enthalten. Insbesondere handelt es sich bei dem organischen Bestandteil um typische Lacke oder Korrosionsschutzprimer ausbildende organische Bestandteile, wie sie aus dem Stand der Technik bekannt sind, insbesondere Ein- oder Mehrkomponentenkunstharze.

Bevorzugt wird als organischer Bestandteil bzw. als organisches Bindemittel ein Polyesterlack eingesetzt. Derartige Polyesterlacke wurden bislang im Bereich dieser Korrosionsschutzlacksysteme in Serienproduktion nicht verwendet. Zudem kann dieser Lack 1 bis 5 % an Melamin- oder Epoxyharzen oder blockierte Isocyanat enthalten, was die Lackanbindung erheblich verbessert.

Durch die erfindungsgemäße Auswahl wird ein erheblich verbesserter Lackverlauf und damit eine erheblich verbesserte Oberfläche erzielt. Zudem kann die Lackschichtdicke hierdurch verringert werden, so dass beim Einsatz des erfindungsgemäßen Systems auch die Schweißbarkeit verbessert wird.

Als Hilfsstoffe sind beispielsweise thyxotropiebeeinflussende Stoffe, Haftvermittler, Farbpigmente, andere metallische Pigmente als Schweißhilfsmittel und sonstige üblicherweise in Korrosionsschutzprimern enthaltene Stoffe enthalten.

Insbesondere können erfindungsgemäß bevorzugt Umformhilfsmittel wie Wachse oder Hydrophobierungsmittel eingesetzt werden. Als Wachse werden hier die üblicherweise als Umformhilfsmittel eingesetzten Wachse wie beispielsweise Karnaubawachse verwendet, als Hydrophobierungsmittel sind Silane bevorzugt.

Die erfindungsgemäßen Korrosionsschutzpigmente sind in der organischen Matrix, sowohl in der flüssigen als auch in der ausgehärteten Form, fein verteilt und bestehen aus einer Legierung aus zumindest zwei Metallen.

Ist eine Schutzschicht 2 vorhanden, entspricht vorzugsweise zumindest eines der Metalle dem als Schutzüberzug 2 verwendeten Metall, das das Stahlsubstrat 1 bedeckt. Abhängig von der Schutzschicht 2 bestehen die Korrosionsschutzpigmente somit aus Zink-Magnesium und/oder Zink-Aluminium. Anstelle der genannten Metalle sind auch Metalle möglich, die bzgl. der elektrochemischen Spannungsreihe und/oder des Periodensystems der Elemente zu diesen Metallen nah benachbart oder verwandt sind, möglich, z.B. Metalle der gleichen Hauptgruppe.

Bei der Verwendung von zinkhaltigen Korrosionsschutzpigmenten hat sich überraschenderweise herausgestellt, dass eine Absenkung des Pigmentgehalts im Lack zugunsten des Bindemittelanteils die Korrosionsschutzeigenschaften zwar nicht verschlechtert, überraschenderweise jedoch die Schweißbarkeit erheblich verbessert. Worauf dieser Mechanismus beruht, ist derzeit nicht bekannt. Es wird jedoch vermutet, dass dieser Effekt auf der niedrigeren Anzahl an Kontaktpunkten bei allerdings erhöhtem Stromdurchgang pro Kontaktpunkt beruht.

Die Pigmente können oberflächenbehandelt oder oberflächenbeschichtet sein. Z.B. können die Pigmente hydrophobiert sein, insbesondere durch Silanisieren, was die Einarbeitung in die organische Matrix erleichtert.

Die erfindungsgemäße Schicht 4 kann dabei auch aus mehreren Unterschichten ausgebildet sein, wobei die Unterschichten beispielsweise Korrosionsschutzpigmente aus unterschiedlichen Metallen enthalten, so dass z.B. eine erste Unterschicht erfindungsgemäße Korrosionsschutzpigmente, z. B. aus einer Zink-Magnesium-Legierung, und eine darauf aufgebrachte zweite Unterschicht erfindungsgemäße Korrosionsschutzpigmente enthält. Selbstverständlich sind auch mehrere Schichten möglich, wodurch sich durch mehrere Schichten der Korrosionswiderstand selbstverständlich erhöht, allerdings auch die entsprechenden Kosten.

Auf eine derart ausgebildete erfindungsgemäße Schicht 4 wird nach herkömmlichen Lackiermethoden ein- oder mehrschichtiger Decklack, insbesondere farbgebender Decklack aufgebracht, wobei erfindungsgemäß auch in derartigen Decklacken gegebenenfalls Korrosionsschutzpigmente, gegebenenfalls auch in anderen Körnungen und/oder Konzentrationen enthalten sind.

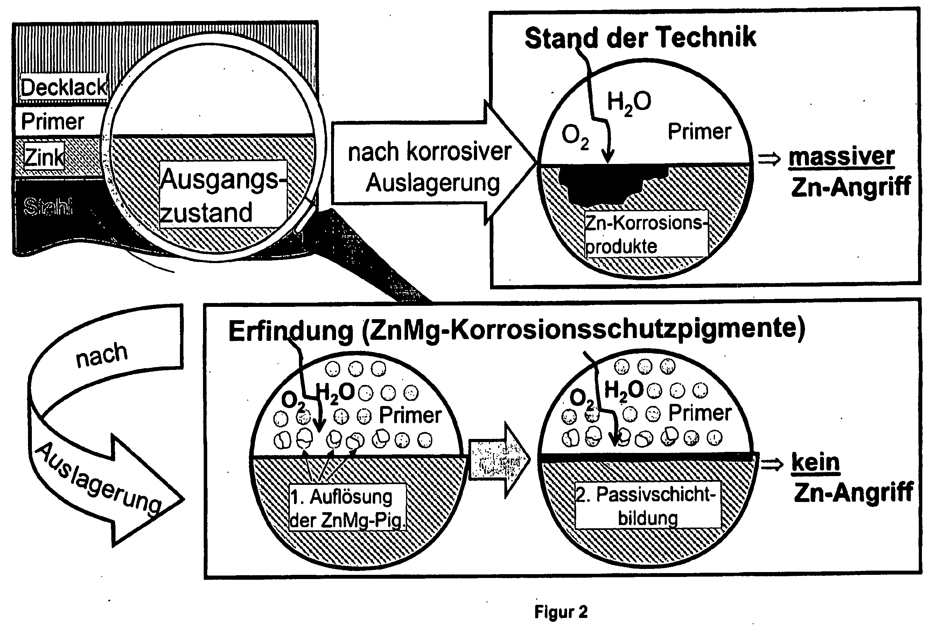

Figur 2 zeigt die unterschiedlichen Reaktionen bei korrosivem Angriff im Stand der Technik und bei der Erfindung. Im Stand der Technik erfolgt bei einem korrosiven Angriff ein direkter korrosiver Angriff der Zinkschicht, welche Zinkkorrosionsprodukte bildet.

Im Gegensatz hierzu werden die erfindungsgemäß im Primer 4 enthaltenen erfindungsgemäßen Korrosionsschutzpigmente durch einen korrosiven Angriff aufgelöst, wobei es offensichtlich zu einer Diffusion hin zur Oberfläche der Schutzschicht 2 oder 3 kommt und an der Oberfläche dieser Schutzschicht sich eine zusätzliche Passivschicht 5 ausbildet. Diese Passivschicht 5 erhöht den Korrosionswiderstand und schützt die darunter liegenden Schichten vor korrosivem Angriff.

Wie es zu dieser Reaktion und der Ausbildung der Passivschicht kommt, ist bislang noch nicht abschließend geklärt.

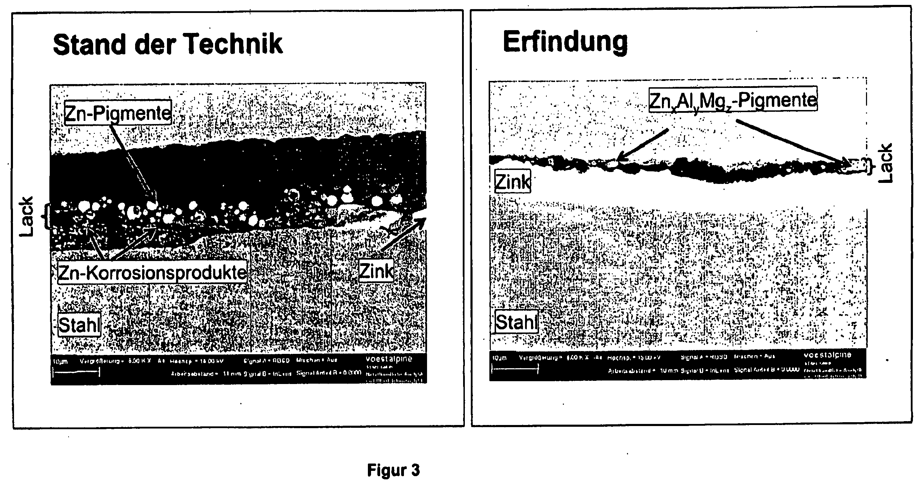

In Figur 3 erkennt man die Unterschiede im Aufbau und in der Wirkungsweise herkömmlicher Beschichtungen. In der Schliffaufnahme links ist der Stand der Technik gezeigt, bei dem ein herkömmlicher Korrosionsschutzprimer, der Zinkpigmente enthält, durch Korrosion in einem 500-Stunden-Salzsprühnebeltest nach DIN EN ISO 9227 angegriffen wurde. Man erkennt, dass die Zinkpigmente mehr oder weniger unverletzt vorhanden sind, während sich auf dem Stahlsubstrat Zinkkorrosionsprodukte gebildet haben und nur noch wenig Restzink da ist.

Dagegen sieht man in der Schliffaufnahme rechts, dass die Zinkschicht bei gleichem Angriff noch unverändert vorliegt und die Korrosion keineswegs bis zum Stahl vorgedrungen ist. Zudem sind noch einige Rest-Zink-Magnesium-Pigmente im Primer vorhanden.

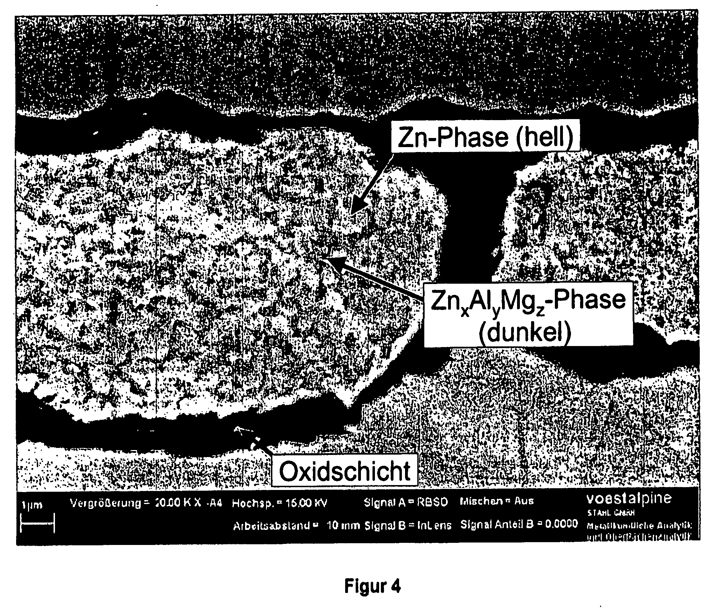

In Figur 4 ist ein derartiges Pigment in Großaufnahme dargestellt, wobei das Korrosionsschutzpigment helle und dunkle Phasen aufweist, die aus Zinkphasen und Zinkmagnesiumlegierungsphasen bestehen und zusätzlich eine Oxydschicht außen vorhanden ist.

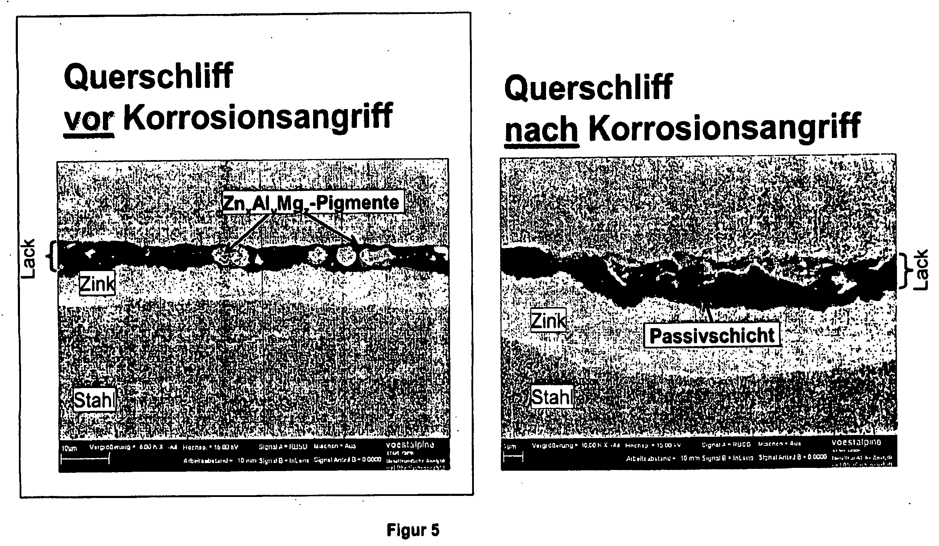

In Figur 5 ist zur Verdeutlichung rechts noch einmal ein Querschliff durch den erfindungsgemäßen Schichtaufbau gezeigt, bei dem vor dem Korrosionsangriff in der organischen Matrix (schwarz) die Korrosionsschutzpigmente angeordnet sind. Nach dem entsprechenden Korrosionsangriff nach DIN EN ISO 9227 (500 Stunden) erkennt man, dass die Korrosionsschutzpigmente offensichtlich verschwunden sind. Jedoch hat sich auf der Zinkschicht eine dünne (helle) weitere Schicht, nämlich die Passivschicht ausgebildet, die offenbar erfolgreich die Zinkschicht vor Korrosion geschützt hat.

Die genannten Pigmente können erfindungsgemäß auch in Klebstoffen zum Fügen von Blechen, insbesondere Karosserieblechen oder Hausgeräteblechen enthalten sein, wodurch eine Korrosion der Fügeverbindung und ein Ablösen des Klebers durch Korrosion am Blech vermieden wird.

Zudem können die Korrosionsschutzpigmente zusätzlich auch in Decklacken vorhanden sein. Ist ein Lackaufbau, wie er bei Karosserieblechen vorkommt, nicht vorgesehen, sondern ist ein einfacher Lackaufbau vorhanden, wie beispielsweise bei Hausgeräten und ähnlichen Anwendungen, können die Korrosionsschutzpigmente auch allein in dem Lack vorhanden sein.

Mit der Erfindung gelingt es somit einen korrosionsschutzaktiven Primer bzw. Schichtaufbau zur Verfügung zu stellen, der auf einen korrosiven Angriff durch eine Passivschichtabscheidung reagiert und es somit ermöglicht, die eigentliche Korrosionsschutzschicht zu schützen. Diese steht als kathodische Korrosionsschutzschicht hierdurch für einen kathodischen Korrosionsschutz nach Schichtverletzung (Steinschlag, Ritz) oder bei noch stärkeren korrosiven Angriff zur Verfügung.

Somit schafft die Erfindung einen Schichtaufbau und Korrosionsschutzpigmente hierfür, die eine erheblich verlängerte Lebensdauer bei korrosivem Angriff ermöglicht.

Bei der Erfindung ist zudem von Vorteil, dass gegenüber herkömmlichen Systemen die Schweißbarkeit erheblich verbessert wird und trotzdem ein schöner Lackverlauf für Außenhautanwendungen gegeben ist. Die Lackergiebigkeit wird erheblich vergrößert, wobei ein überragender Korrosionsschutz bei verringerten Lackschichtdicken von 1 bis 4 µm im Gegensatz zu bisher 3 bis 5 µm gegeben ist. Die Schere zwischen Korrosionsschutz einerseits und Schweißeignung andererseits konnte überbrückt werden, so dass eine erhebliche Verbesserung der Perforationskorrosion (Flanschkorrosion) bei Einhaltung der geforderten Schweißeignung möglich ist. Zudem wurde die Umformeignung erheblich verbessert und die Lackanbindung.durch den Zusatz der Melaminharze oder Epoxyharze oder blockierten Isocyanate ebenfalls deutlich verbessert.

Von Umweltrelevanz ist, dass im Gegensatz zu herkömmlichen Systemen, die eine Vorbehandlung mit teils kanzerogenen Inhaltsstoffen benötigten (Chromate, Cobaltnitrate), eine einstufige chromatfreie Vorbehandlung möglich ist. Dabei kann das System auf den unterschiedlichsten Substraten und unterschiedlichsten Beschichtungen von Metallen, beispielsweise Al, Fe, Zn und deren Legierungen aufgebracht werden.

Als ein weiterer Vorteil hat sich herausgestellt, dass bei der Verwendung des erfindungsgemäßen Korrosionsschutzsystems bzw. Aufbaus die Einbrenntemperatur (Peak Metal Temperature - PMT) von 190° bis 240°C PMT auf etwa 160°C PMT herabgesenkt werden kann, so dass höchstfeste und Bake-Hardening-Stähle an der Bandbearbeitung lackiert werden können.

Eine beispielhafte Zusammensetzung eines geeigneten Pigmentes (Leit- und Korrosionsschutzpigmentes)ist nachfolgend wiedergegeben (alle Angaben in M-%):
Zn/Mg von 90/10 bis 99,5/0,5 bevorzugt 95/5 bis 99/1 besonders bevorzugt 98/2.
Zn/Al von 80/20 bis 99,5/0,5 bevorzugt 95/5 bis 99/1 besonders bevorzugt 98/2.
Ggf. können Spuren weiterer Elemente vorhanden sein.

Die nachfolgende Tabelle gibt die Erfindung wieder.

| **Zusammensetzung** | **Bereich der Ant. in Gew.-%** |
|---|---|
| **Bindemittel** | |
| | Auf Bindemittel berechnet/bevorzugt |
| Polyesterharz (verzweigt) | 30,00 - 50,00% / 40 % |
| Polyesterharz (linear) | 15,00 - 30,00% / 20 % |
| Epoxidharz | 5,00 - 30,00% / 10 % |
| Melaminharz (Hexamethoxymethylmelamin) HMMM | 10,00 - 25,00% / 15 % |
| Blockiertes Isocyanat (Hexamethyldiisocyanat) HDI | 10,00 - 25,00% / 15 % |

| **Additive** | |
|---|---|
| | Auf Gesamtrezeptur berechnet |
| Netzmittel | 0,050 - 1,000% / 0,1 % |
| Entschäumer | 0,100 - 1,000% / 0,25 % |
| Benetzungsadditiv | 0,050 - 1,000% / 0,1 % |
| Verlaufsmittel | 0,100 - 1,000% / 0,2 % |
| Katalysator | 0,500 - 2,500% / 1 % |

| **Pigmente** | |
|---|---|
| Leitfähige Pigmente | 25,000 - 40,000% / 30 % |
| Org. Zn-Korrosionsinhibitor | 0,250 - 2,000% / 1 % |
| Korrosionsschutz | 4,000 - 8,000% / 6,5 % |
| Antiabsetzmittel | 0, 050 - 1,000% / 0,1 % |
| Hydrophobierung (Wachs) | 0,250 - 2,000% / 0,5 % |

| **Organisches Lösemittel** | |
|---|---|
| Lösemittel (Ester) | 5,000 - 10,000 / 7,5 % |
| Lösemittel (Glykol) | 1,000 - 10,000 / 2 1 % |
| Lösemittel (aromatischer Kohlenwasserstoff) < 1% Naphthalen | Rest auf 100,000 / 28,2 % |

## Patentansprüche

1. Korrosionsschutzsystem für Metalle bestehend
a) zumindest aus einem auf ein Metall aufzubringenden Überzug oder Beschichtung,
b) wobei der Überzug bzw. die Beschichtung eine organische Matrix umfasst,
c) wobei die organische Matrix zudem Korrosionsschutzpigmente enthält,
d) wobei die Korrosionsschutzpigmente fein verteilt in der organischen Matrix vorliegen und
e) wobei die Korrosionsschutzpigmente aus einer Metalllegierung aus zumindest zwei Metallen sowie gegebenenfalls unvermeidbaren Verunreinigungen ausgebildet sind und
f) dass das Bindemittel-Pigment-Verhältnis von 1:1 bis 1:4 beträgt und
g) dass das leitfähige Pigment entweder eine Zusammensetzung von Zn/Mg von 90/10 bis 99,5/0,5 (in M-%) oder eine Zusammensetzung von Zn/Al von 80/20 bis 99,5/0,5 (in M-%) und jeweils unvermeidliche Verunreinigungen aufweist,
und folgende Elemente in Gew.-%, jeweils auf Gesamtrezeptur berechnet, aufweist:
| **Zusammensetzung** | **Bereich der Ant. in Gew.-%** |
|---|---|
| **Bindemittel** | |
| | Auf Bindemittel berechnet |
| Polyesterharz (verzweigt) | 30,00 - 50,00% |
| Polyesterharz (linear) | 15,00 - 30,00% |
| Epoxidharz | 5,00 - 30,00% |
| Melaminharz (Hexamethoxymethylmelamin) HMMM | 10,00 - 25,00% |
| Blockiertes Isocyanat (Hexamethyldiisocyanat) HDI | 10,00 - 25,00% |
| **Additive** | |
|---|---|
| | Auf Gesamtrezeptur berechnet |
| Netzmittel | 0,050 - 1,000% |
| Entschäumer | 0,100 - 1,000% |
| Benetzungsadditiv | 0,050 - 1,000% |
| Verlaufsmittel | 0,100 - 1,000% |
| Katalysator | 0,500 - 2,500% |
| **Pigmente** | |
|---|---|
| Leitfähige Pigmente | 25,000 - 40,000% |
| Org. Zn-Korrosionsinhibitor | 0,250 - 2,000% |
| Korrosionsschutz | 4,000 - 8,000% |
| Antiabsetzmittel | 0,050 - 1,000% |
| Hydrophobierung (Wachs) | 0,250 - 2,000% |
| **Organisches Lösemittel** | |
|---|---|
| Lösemittel (Ester) | 5,000 - 10,000 |
| Lösemittel (Glykol) | 1,000 - 10,000 |
| Lösemittel (aromatischer Kohlenwasserstoff) < 1% Naphthalen | 28,2 % |

## Claims

1. Corrosion-protective system for metal's, consisting of
a) at least one coat or coating,
b) wherein the code or coating comprises an organic matrix,
c) wherein the organic matrix in addition contains corrosion-protective pigments,
d) wherein the corrosion-protective pigments are present in the organic matrix in a finely dispersed form
e) wherein the corrosion-protective pigments are formed from a metal alloy of at least two matters and, possibly, unavoidable contaminations, and
f) the ratio between binder and pigments is from 1:1 to 1:4, and
g) the conductive pigment comprises either a composition of Zn/Mg from 90/10 two 99,5/0,5 (in mole-%), or a composition of Zn/Al from 80/20 to 99,5/0,5 (in mole-%), as well as unavoidable impurities, respectively, and
comprises the following elements in weight-%, respectively calculated in relation to the global formulation
| **composition** | **range of parts in weight-%** |
|---|---|
| **binder** | |
| | calculated in relation to the binder |
| polyester resin (cross-linked) | 30,00 - 50,00 % |
| polyester resin (linear) | 15,00 - 30,00 % |
| epoxy resin | 5,00 - 30,00 % |
| melamine resin (hexamethoxymethylmelamine) HMMM | 10,00 - 25,00 % |
| protected isocyanate (hexamethyldiisocyanate) HDI | 10,00 - 25,00 % |
| **additives** | |
|---|---|
| | calculated in relation to the global formulation |
| tensioactive agent | 0,050 - 1,000% |
| anti-foaming agent | 0,100 - 1,000% |
| wetting agent | 0,050 - 1,000% |
| levelling agent | 0,100 - 1,000% |
| catalyst | 0,500 - 2,500% |
| **pigments** | |
|---|---|
| conductive pigments | 25,000 - 40,000% |
| organic Zn-corrosion inhibitor | 0,250 - 2,000 % |
| anticorrosion protection | 4,000 - 8,000% |
| stabilising agent | 0,050 - 1,000% |
| hydrophobisation (wax) | 0,250 - 2,000 % |
| **organic solvents** | |
|---|---|
| solvent (ester) | 5,000 - 10,000% |
| solvent (glycol) | 1,000 - 10,000% |
| solvent (aromatic hydrocarbon) < 1% naphthalene | 28,2% |

## Revendications

1. Système de protection anticorrosion pour métaux consistant
a) d'au moins une couverture ou un revêtement,
b) dans lequel la couverture ou le revêtement comprend une matrice organique,
c) dans lequel la matrice organique comprend en outre des pigments de protection anticorrosion,
d) dans lequel les pigments de protection anticorrosion sont dispersés dans la matrice organique et
e) dans lequel les pigments de protection anticorrosion sont formés à partir d'un alliage métallique consistant d'au moins 2 métaux ainsi que facultativement d'impureté inévitable et
f) le rapport entre liant et pigments comporte de 1:1 à 1:4, et
g) le pigment conducteur comprend soit une composition de Zn/Mg de 90/10 à 99,5/0,5 (en % en moles), soit une composition de Zn/Al de 80/20 à 99,5/0,5 (en % en moles), ainsi que respectivement des impuretés inévitables et
comprend les éléments suivants en % en poids, respectivement calculé par rapport à la formulation globale
| **composition** | **plage des part. en % en poids** |
|---|---|
| **liant** | |
| | calculé par rapport au liant |
| résine de polyester (ramifié) | 30,00 - 50,00 % |
| résine de polyester (linéaire) | 15,00 - 30,00 % |
| résine d'époxyde | 5,00 - 30,00 % |
| résine de mélamine (hexamethoxymethylmelamine) HMMM | 10,00 - 25,00 % |
| isocyanate protégé (hexamethyldiisocyanate) HDI | 10,00 - 25,00 % |
| **adjuvants** | |
|---|---|
| | calculé par rapport à la formulation globale |
| tensioactif | 0,050 - 1,000% |
| antimousse | 0,100 - 1,000% |
| agent mouillant | 0,050 - 1,000% |
| aqent de nivellement | 0,100 - 1,000% |
| catalyseur | 0,500 - 2,500% |
| **pigments** | |
|---|---|
| pigments conducteurs | 25,000 - 40,000% |
| inhibiteur de corrosion de Zn organique | 0,250 - 2,000 % |
| protection anticorrosion | 4,000 - 8,000% |
| agent stabilisateur | 0,050 - 1,000% |
| rendement hydrophobe (cire) | 0,250 - 2,000% |
| **solvants organiques** | |
|---|---|
| solvant (ester) | 5,000 - 10,000% |
| solvant (glycol) | 1,000 - 10,000% |
| solvant (hydrocarbure aromatique) < 1% de naphtalene | 28,2% |
